# EUROPÄISCHE PATENTANMELDUNG

(11) **EP 3 281 728 A1**
(43) Veröffentlichungstag der Anmeldung: **14.02.2018**
(21) Anmeldenummer: 16183852.9
(22) Anmeldetag: 11.08.2016
(51) Int. Cl.: B22F 3/105, B23H 1/04, B23H 3/04, B23H 5/00, B23H 9/10, B22F 5/00, B22F 5/04, B22F 5/10, B23K 26/342, B22F 3/24

(54) **VERFAHREN ZUR HERSTELLUNG EINES BAUTEILS EINER ROTATIONSMASCHINE SOWIE BAUTEIL HERGESTELLT NACH EINEM SOLCHEN VERFAHREN**

(71) Anmelder: Sulzer Management AG, 8401 Winterthur (CH)
(72) Erfinder: Kränzler, Thomas, 88682 Salem (DE); Rettberg, Robin, 8400 Winterthur (CH); Würms, Andreas, 8214 Gächlingen (CH)
(74) Vertreter: Intellectual Property Services GmbH

(57) **Zusammenfassung**

Es wird ein Verfahren zur Herstellung eines Bauteils einer Rotationsmaschine vorgeschlagen, welches mindestens einen inneren Kanal (7) aufweist, der sich von einem ersten Ende (72) bis an ein zweites Ende (71) in einer Begrenzungsfläche (42) des Bauteils erstreckt, und zumindest teilweise geschlossen ist, bei welchem Verfahren eine geometrische Endform des Bauteils festgelegt wird, das Bauteil mittels aufbauender Fertigung im Wesentlichen in die geometrische Endform gebracht wird, und anschliessend eine Endbearbeitung durchgeführt wird, in welcher der innere Kanal (7) mittels einer subtraktiven Fertigung nachbearbeitet wird, wobei die subtraktive Fertigung eine elektrische Bearbeitung ist. Ferner wird ein nach einem solchen Verfahren hergestelltes Bauteil vorgeschlagen.

## Beschreibung

Die Erfindung betrifft ein Verfahren zur Herstellung eines Bauteils einer Rotationsmaschine, welches mindestens einen inneren Kanal aufweist, der sich von einem ersten Ende bis an ein zweites Ende in einer Begrenzungsfläche des Bauteils erstreckt, und zumindest teilweise geschlossen ist. Die Erfindung betrifft ferner ein Bauteil einer Rotationsmaschine, das nach einem solchen Verfahren hergestellt ist.

Bei der Herstellung von Rotationsmaschinen wie z. B. Pumpen, Turbinen, Kompressoren, Verdichtern oder Expandern ist es bekannt, rotierende Laufräder, Pumpenräder, Impeller, sowie feststehende Diffusoren oder Leiträder als Bauteil aus einem Rohling durch zerspanende bzw. spanabhebende Bearbeitung, beispielsweise durch Fräsen, herauszuarbeiten. Dabei kann der Rohling als Vollmaterial vorliegen oder durch einen urformenden Fertigungssprozess bereits vorbearbeitet sein.

Ein solches Verfahren ist beispielsweise aus der EP-B-2 012 957 bekannt. Das dort vorgeschlagene Verfahren zeichnet sich insbesondere dadurch aus, dass es eine zerspanende Herstellung des Bauteils ermöglicht, womit gemeint ist, dass das Bauteil gesamthaft aus dem Rohling mittels einer Zerspanvorrichtung zumindest im Wesentlichen in die gewünschte Endform gebracht wird. Das Zusammenfügen von vorgefertigten Komponenten des Bauteils, beispielsweise mittels Schweissens, ist bei einer solchen integralen Herstellung nicht mehr notwendig. Dies ist insbesondere deshalb vorteilhaft, weil Schweissnähte oder andere Verbindungsstellen an stark belasteten Teilen des Bauteils im Betriebszustand eine Schwachstelle darstellen, die Ursache eines Risses oder einer anderen Schädigung, beispielsweise einer durch Korrosion bedingten, des Bauteils sein kann.

Somit ist insbesondere bei hoch belasteten Bauteilen eine zerspanende Herstellung ohne das Zusammenfügen von einzelnen Komponenten vorteilhaft. Daher werden solche Bauteile wie beispielsweise Laufräder (Impeller) von Pumpen aus massivem Material, je nach Anwendung z.B. aus hochfesten Edelstählen, Superlegierungen, anderen geeigneten Metallen oder Metalllegierungen oder auch aus nicht metallischen Werkstoffen, beispielsweise keramischen, gefertigt und die Schaufeln und Kanäle des Laufrads werden durch spanabhebende Bearbeitung, z.B. durch Fräsen, aus diesem Material herausgearbeitet.

Wie dies auch in der EP-B-2 012 957 bereits dargelegt wird, ist jedoch manchmal aus rein geometrischen Gründen eine gesamthafte zerspanende Herstellung des Bauteils nicht möglich. Dies kann beispielsweise der Fall sein, wenn die Laufräder (Impeller) als gedeckte oder geschlossene Laufräder ausgestaltet sind. Bei einer solchen Ausgestaltung umfasst das Laufrad eine Nabenscheibe, auf welcher die Schaufeln angeordnet sind und ferner eine Deckscheibe, welche die Schaufeln auf Ihrer der Nabenscheibe abgewandten Seite ganz oder zumindest teilweise überdeckt. Somit bilden sich zwischen den Schaufeln zumindest teilweise geschlossene Kanäle aus, die sich jeweils vom Zentrum des Laufrads bis zu seiner äusseren radialen Begrenzungsfläche erstrecken.

Selbst wenn man in Betracht zieht, dass man mit einer Zerspanvorrichtung diese Kanäle von beiden Seiten, also vom Innenraum des Laufrads als auch von seiner radialen Begrenzungsfläche her, aus dem Rohling fräsen bzw. zerspanend bearbeiten kann, so ist klar, dass die Geometrie hier Grenzen setzt und in vielen Fällen eine gesamthafte zerspanende Herstellung unmöglich macht.

In solchen Fällen, in denen es aus rein geometrischen Gründen nicht mehr möglich oder praktikabel ist, das Laufrad insgesamt in einem Stück aus massivem Material zu fräsen, ist es daher Stand der Technik, zunächst aus einem Rohling die Nabenscheibe und die Schaufeln zerspanend herauszuarbeiten. Die Kanäle zwischen den Schaufeln sind dann offene Kanäle, die in einfacher Weise herstellbar sind. Anschliessend wird die Deckscheibe aufgelegt und mit der Nabenscheibe bzw. den Schaufeln gefügt, beispielsweise verschweisst. Die Schweissnähte bzw. die Fügestellen verlaufen dann jeweils dort, wo die Schaufeln mit der Deckscheibe in Kontakt kommen. Dies bringt jedoch den Nachteil mit sich, dass gerade an dieser Stelle im Betriebszustand die Belastungen besonders hoch bzw. kritisch sind. Dieser Grenzbereich zwischen den Schaufeln und der Deckscheibe ist besonders anfällig für Fügefehler, die manchmal bei der Herstellung gar nicht bemerkt werden.

Alternativ ist es auch bekannt, die nicht mehr dem Fräsen zugänglichen Bereiche der Kanäle mit einem Erodierverfahren, beispielsweise Funkenerodieren (EDM: electrical discharge machining), zu fertigen. Mit diesem Verfahren innere Kanäle bzw. Teilabschnitte von inneren Kanälen aus dem Vollmaterial herauszuarbeiten ist aber in der Regel vergleichsweise langsam, kostenintensiv und wenig wirtschaftlich.

Auch ist es Stand der Technik, solche Bauteile mit inneren Kanälen giesstechnisch herzustellen, wobei die inneren Kanäle dann durch eine entsprechende Ausgestaltung der Giessform bzw. der Giesskerne erzeugt werden. Ein Gussbauteil hat aber den Nachteil, dass beim Giessen Defekte beispielsweise in der Gefügestruktur entstehen können, welche die Belastbarkeit oder die Stabilität des Bauteils negativ beeinflussen. Desweiteren sind beim Giessprozess in der Regel die erreichbaren Oberflächengüten sowie die Masshaltigkeiten der nicht mehr dem Fräsen zugänglichen Bereiche limitiert. Insbesondere bei Bauteilen, wie z.B. Laufrädern, die eine sehr hohe Anforderung an die geometrische Masshaltigkeit oder an die Reproduzierbarkeit des Bauteils stellen, ist daher das Giessen des Bauteils eine weniger geeignete Methode.

In der EP-A-2 669 042 wird deshalb ein Verfahren zur zerspanenden Herstellung eines geschlossenen Laufrads vorgeschlagen, bei welchem das zu fertigende Bauteil (Laufrad) in zwei Subvolumen unterteilt wird, die an einer Trennfläche aneinandergrenzen. Dabei werden die Subvolumen so festgelegt, dass die Trennfläche keine der Begrenzungsflächen der Kanäle umfasst oder schneidet, und dass aus dem ersten Subvolumen, welches später die vollständigen Kanäle umfasst, die Kanäle gesamthaft mittels einem zerspanenden Verfahren, z. B. Fräsen, herausgearbeitet werden können. Das zweite Subvolumen, welches dann lediglich ein Teil der Deckscheibe ist, wird entweder als separate Komponente hergestellt und nach der Fertigstellung der Kanäle mit dem ersten Subvolumen gefügt, oder das zweite Subvolumen wird mittels eines auftragenden Bearbeitungsverfahrens, beispielsweise mittels Auftragschweissens auf dem ersten Subvolumen aufgebaut. Hierdurch soll es einerseits ermöglicht werden, die Kanäle vollständig durch eine zerspanende Herstellung zu fertigen, und andererseits soll es vermieden werden, dass die Trennfläche die Kanäle schneidet oder begrenzt, sodass im Grenzbereich zwischen den Schaufeln und der Deckscheibe keine Fügefehler auftreten können. Aber auch dieses Verfahren unterliegt immer noch geometrisch bedingten Grenzen.

Dieses anhand geschlossener Laufräder erläuterte Problem gibt es aber auch bei anderen Bauteilen, die einen inneren Kanal aufweisen, dessen Lage oder Geometrie derart ist, dass eine gesamthafte zerspanende Herstellung insbesondere aus geometrischen Gründen nicht möglich, nicht wirtschaftlich oder nicht praktikabel ist. Als Beispiele seien hier geschlossene Leiträder, Diffusoren oder auch Kühlkanäle, beispielsweise für Kühlluft, in Turbinenschaufeln genannt.

Ausgehend von diesem Stand der Technik ist es daher eine Aufgabe der Erfindung, ein anderes Verfahren zur Herstellung eines Bauteils einer Rotationsmaschine, das mindestens einen inneren Kanal hat, vorzuschlagen, mit welchem insbesondere auch solche Bauteile herstellbar sind, die aus geometrischen Gründen keine gesamthaft zerspanende Herstellung des Kanals zulassen, wobei das Verfahren eine hohe Masshaltigkeit und eine hohe Zuverlässigkeit des Bauteils im Betriebszustand ermöglichen soll. Ferner soll durch die Erfindung ein entsprechendes Bauteil vorgeschlagen werden.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zur Herstellung eines Bauteils einer Rotationsmaschine vorgeschlagen, welches mindestens einen inneren Kanal aufweist, der sich von einem ersten Ende bis an ein zweites Ende in einer Begrenzungsfläche des Bauteils erstreckt, und zumindest teilweise geschlossen ist, bei welchem Verfahren eine geometrische Endform des Bauteils festgelegt wird, das Bauteil mittels aufbauender Fertigung im Wesentlichen in die geometrische Endform gebracht wird, und anschliessend eine Endbearbeitung durchgeführt wird, in welcher der innere Kanal mittels einer subtraktiven Fertigung nachbearbeitet wird, wobei die subtraktive Fertigung eine elektrische Bearbeitung ist.

Es hat sich gezeigt, dass sich mit einer komplett aufbauenden und insbesondere mit einer generativen oder additiven Fertigung solcher Bauteile eine im Vergleich beispielsweise zum Giessen sehr hohe Masshaltigkeit der gewünschten geometrischen Endform erzielen lässt. Zudem zeichnet sich die aufbauende Fertigung durch eine besonders gute Reproduzierbarkeit des Bauteils aus. Diese hohe Masshaltigkeit und die gute Reproduzierbarkeit sind wesentliche Faktoren für die Zuverlässigkeit und die Betriebssicherheit des Bauteils im Betriebszustand. Dies gilt in besonderem Masse für den inneren Kanal bzw. die inneren Kanäle, die im Betriebszustand von einem Fluid, z. B. Wasser, durchströmt werden und daher sehr hohen Belastungen ausgesetzt sind.

Auch wenn sich durch die aufbauende Fertigung eine hohe geometrische Reproduzierbarkeit und eine hohe Masshaltigkeit gewährleisten lässt, so hat es die Praxis gezeigt, dass die Oberflächen, welche den inneren Kanal bzw. die inneren Kanäle begrenzen, bezüglich ihrere Oberflächenstruktur und insbesondere ihrer Rauigkeit bzw. ihrer Struktur noch weiter verbessert werden können. Je nach verwendeter Methode für die aufbauende Fertigung kann es nämlich sein, dass diese den Kanal oder die Kanäle begrenzenden Oberflächen eine zu hohe Rauigkeit aufweisen oder eine Strukturierung, beispielsweise eine lamellenartige Struktur oder eine Welligkeit, oder eine andere, nicht optimale Struktur. Um diese Oberflächenstrukturen zu entfernen bzw. zu glätten und damit die gewünschte Oberflächenqualität bzw. - beschaffenheit zu realisieren, wird daher erfindungsgemäss ferner vorgeschlagen, an dem inneren Kanal oder den inneren Kanälen anschliessend an die aufbauende Fertigung eine Endbearbeitung durchzuführen, in welcher der innere Kanal mittels einer subtraktiven Fertigung, also materialabtragend, nachbearbeitet wird, wobei die subtraktive Fertigung eine elektrische Bearbeitung ist. Gerade durch diese Kombination der aufbauenden Fertigung mit einer anschliessenden elektrischen Endbearbeitung des inneren Kanals lassen sich Bauteile von Rotationsmaschienen, z.B. Laufräder, mit einer äusserst hohen Masshaltigkeit und mit einer hervorragenden Reproduzierbarkeit kosteneffizient herstellen. Derart hergestellte Bauteile zeichnen sich im Betrieb durch eine hohe Zuverlässigkeit und Betriebssicherheit aus.

Das erfindungsgemässe Verfahren kombiniert somit in vorteilhafter Weise eine aufbauende Fertigung, insbesondere eine additive Fertigung, bei welcher Material aufgetragen wird, mit einer elektrischen subtraktiven Fertigung, bei welcher Material entfernt wird. Durch diese Kombination ist es möglich, einen Kanal mit -zumindest nahezu - beliebiger Geometrie zu generieren, wobei die Oberflächen, welche den Kanal begrenzen, eine sehr hohe und insbesondere auch reproduzierbare Oberflächengüte aufweisen. Durch das erfindungsgemässe Verfahren lässt sich somit eine Oberflächenoptimierung realisieren oder eine besonders gute Geometrietreue erzielen.

Da für die Herstellung des Bauteils keine giesstechnischen Verfahren eingesetzt werden, kann die gewünschte geometrische Endform im Wesentlichen bereits in der aufbauenden Fertigung mit hoher Masshaltigkeit generiert werden. Mit "im Wesentlichen" ist dabei gemeint, dass die wesentliche Formgebung des Bauteils nach der aufbauenden Fertigung bereits abgeschlossen ist und nur noch eine Nachbearbeitung bzw. Endbearbeitung des Bauteils erfolgt. Bei dieser Endbearbeitung werden typischerweise Oberflächen geglättet oder unerwünschte Oberflächenstrukturen entfernt. Auch ist mit dem Begriff "im Wesentlichen" gemeint, dass bei der aufbauenden Fertigung optional ein Bearbeitungsaufmass vorgesehen sein kann, welches dann in der Endbearbeitung entfernt wird. Ein solches Bearbeitungsaufmass kann insbesondere auf denjenigen Oberflächen vorgesehen sein, welche den inneren Kanal bzw. die inneren Kanäle begrenzen. Typischerweise beträgt das Bearbeitungsaufmass je nach Anwendungsfall 0.1 mm bis 0.5 mm.

Aus verfahrenstechnischen Gründen ist es besonders bevorzugt, wenn die aufbauende Fertigung mit Hilfe eines Lasers durchgeführt wird. Inbesondere sind die Verfahren des selektiven Laserschmelzens (SLM: Selective Laser Melting) und des selektiven Lasersinterns (SLS) für die aufbauende Fertigung geeignet.

Hinsichtlich der elektrischen Endbearbeitung ist es eine bevorzugte Ausführungsform, wenn die elektrische Bearbeitung mit elektrochemischem Abtragen erfolgt. Elektrochemisches Abtragen (ECM: Electro Chemical Machining), das auch als Elysieren bezeichnet wird, hat sich als besonders geeignet erwiesen, um insbesondere auf den Oberflächen, welche den inneren Kanal begrenzen, eine ausgezeichnete Oberflächenqualität im Hinblick auf Rauigkeit und Struktur zu realisieren.

Eine ebenfalls bevorzugte Ausführungsform ist es, wenn die elektrische Bearbeitung mit Funkenerosion durchgeführt wird. Das Funkenerodieren (EDM: Electrical Discharge Machining) eignet sich ebenfalls insbesondere zum Realisieren von glatten, strukturfreien Oberflächen.

Natürlich ist es auch möglich, sowohl ECM und EDM für die elektrische Bearbeitung des Bauteils zu verwenden, beispielsweise in Form einer Kombination dieser beiden Verfahren, die als Electro Chemical Discharge Machining (ECDM) bezeichnet wird.

Für die genannten elektrischen Verfahren für die Endbearbeitung des inneren Kanals ist es insbesondere vorteilhaft, dass sie lediglich für die Endbearbeitung der Oberflächen verwendet werden, welche den Kanal begrenzen, und nicht für das subtraktive Herausarbeiten des Kanals aus einem Vollmaterial. Daher lassen sich diese elektrischen Verfahren hier besonders wirtschaftlich und kosteneffizient einsetzen und ohne dass dafür sehr lange Bearbeitungszeiten in Kauf genommen werden müssem.

Gemäss einer aus verfahrenstechnischen Gründen bevorzugten Ausführungsform erfolgt die aufbauende Fertigung schichtweise. Dabei ist es möglich, dass jede Schicht senkrecht zu einer axialen Richtung orientiert ist. Natürlich ist es auch möglich, die Schichten in anderen Ausrichtungen aufzutragen, also derart, dass die jeweilige Flächennormale der Schicht schräg zur axialen Richtung ausgerichtet ist.

Vorzugsweise umfasst die aufbauende Fertigung mehrere additive Bearbeitungsschritte, welche sukzessive und ohne dazwischenliegende subtraktive Bearbeitungsschritte durchgeführt werden. Der additive Aufbau erfolgt somit vorzugsweise durch sukzessives Aufbringen von Materialschichten, bis das Bauteil fertiggestellt ist, ohne das der additive Aufbau durch Subtraktive Bearbeitungsschritte unterbrochen wird. Dies ermöglicht eine besonders schnelle und effiziente Herstellung des Bauteils.

Das Aufbringen von Schichten erfolgt in einer bevorzugten Variante derart, dass die einzelnen Schichten rotationssymmetrisch sind. Dies ist insbesondere auch dann möglich, wenn die Schichten senkrecht zu der axialen Richtung orientiert sind, aber auch bei einem Schichtauftrag, bei welchem die einzelnen Schichten schräg zur axialen Richtung orientiert sind

In einer bevorzugten Ausführungsform umfasst das Bauteil eine Mehrzahl von inneren Kanälen, von denen sich jeder von einem ersten Ende in einem Zentrum des Bauteils bis an ein jeweilges zweites Ende in der Begrenzungsfläche des Bauteils erstreckt, wobei benachbarte Kanäle jeweils durch eine Trennwand getrennt sind.

Für die Praxis besonders relevante Anwendungen sind es, wenn das Bauteil als Laufrad, als Leitrad oder als Diffusor einer Rotationsmaschine ausgestaltet ist, insbesondere einer Pumpe, einer Turbine, eines Kompressors, eines Verdichters oder eines Expanders.

Bezüglich der elektrischen Bearbeitung ist es eine vorteilhafte Massnahme, wenn für die elektrische Bearbeitung eine Elektrode von dem ersten Ende des jeweiligen Kanals in den Kanal eingeführt wird.

Ferner ist es bevorzugt, wenn alternativ oder ergänzend für die elektrische Bearbeitung eine Elektrode von dem zweiten Ende des jeweiligen Kanals in den Kanal eingeführt wird.

Es ist also möglich, für die elektrische Bearbeitung des jeweiligen Kanals entweder nur von dem ersten oder von dem zweiten Ende des jeweiligen Kanals eine Elektrode in den zu bearbeitenden Kanal einzuführen, aber auch, den jeweiligen Kanal in einem Teilabschnitt durch Einführen einer Elektrode von dem ersten Ende des jeweiligen Kanals zu bearbeiten und in einem anderen Teilabschnitt durch Einführen einer Elektrode von dem zweiten Ende des Kanals. Es hängt von dem konkreten Anwendungsfall ab, welche dieser drei Varianten am meisten bevorzugt ist.

Eine besonders bevorzugte Massnahme ist es, wenn für die elektrische Bearbeitung eine Elektrode verwendet wird, deren geometrische Form an die geometrische Form zumindest eines Teilabschnitts des jeweiligen Kanals angepasst ist. Die Elektrode ist also beispielsweise so ausgestaltet, dass sie der Krümmung des zu bearbeitenden Kanals folgt. Nachdem diese Elektrode in den Kanal eingeführt ist, füllt sie dann den genannten Teilabschnitt bis auf den notwendigen Abstand von den Oberflächen, welche den Kanal begrenzen, im Wesentlichen vollständig aus. Dies ist natürlich so zu verstehen, dass bei der elektrischen Bearbeitung, also beispielsweise bei ECM oder EDM ein direkter körperlicher Kontakt zwischen der Elektrode und der zu bearbeitenden Oberfläche vermieden werden soll, damit es nicht zu einem elektrischen Kurzschluss kommt. Daher ist in an sich bekannter Weise ein endlicher Abstand zwischen der Elektrode und der zu behandelnden Oberfläche notwendig.

Insbesondere bei solchen Ausführungsformen, bei denen für die elektrische Bearbeitung eine Elektrode nur von einem der beiden Enden des Kanals in diesen eingeführt wird, ist es vorteilhaft, wenn für die elektrische Bearbeitung eine Elektrode verwendet wird, deren geometrische Form an die geometrische Form des geschlossenen Bereichs des jeweiligen Kanals angepasst ist. Dies ist im vorangehenden erläuterten Sinne zu verstehen.

Durch die Erfindung wird ferner ein Bauteil einer Rotationsmaschine vorgeschlagen, welches nach einem erfindungsgemässen Verfahren hergestellt ist.

Gemäss einer bevorzugten Ausgestaltung ist jede Trennwand als Schaufel ausgestaltet.

Für die Praxis besonders wichtige Ausführungen sind es, wenn das Bauteil als Laufrad, als Leitrad oder als Diffusor einer Rotationsmaschine, insbesondere einer Pumpe, einer Turbine, eines Kompressors, eines Verdichters oder eines Expanders ausgestaltet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine perspektivische Darstellung eines Ausführungsbeispiels eines erfindungsgemässen Bauteils, das gemäss einem Ausführungsbeispiel eines erfindungsgemässen Verfahrens hergestellt ist,
- Fig. 2:: eine Schnittdarstellung des Bauteils aus Fig. 1 in einem Schnitt in axialer Richtung,
- Fig. 3:: eine perspektivische Darstellung des Bauteils aus Fig. 1 mit einer Elektrode für die Endbearbeitung,
- Fig. 4:: wie Fig. 3, jedoch mit vollständig eingeführter Elektrode,
- Fig. 5:: eine Schnittdarstellung des Bauteils aus Fig. 1 in einem Schnitt senkrecht zur axialen Richtung mit vollständig eingeführter Elektrode für die Endbearbeitung, und
- Fig. 6:: eine schematische Darstellung zur Veranschaulichung einer Variante des Verfahrens.

Das erfindungsgemässe Verfahren dient zur Herstellung eines Bauteils einer Rotationsmaschine, wobei das Bauteil mindestens einen inneren Kanal aufweist, der sich von einem ersten Ende bis an ein zweites Ende in einer Begrenzungsfläche des Bauteils erstreckt und zumindest teilweise geschlossen ist. Mit einem geschlossenen Kanal ist dabei ein Kanal gemeint, der abgesehen von einem Einlass oder einem Auslass vollständig geschlossen ist, also rohrförmig ausgestaltet ist, das heisst der Kanal ist senkrecht zu seiner Hauptströmungsrichtung überall von einer oder mehreren Wandung(en) begrenzt. Im Unterschied dazu ist mit einem offenen Kanal ein solcher gemeint, der in einer Richtung senkrecht zu seiner Hauptströmungsrichtung, also in einer Richtung senkrecht zu seiner Längserstreckung nicht durch eine Wandung begrenzt, sondern offen ist. So ist beispielsweise ein Kanal mit einer U-förmigen oder V-förmigen Wandung ein offener Kanal. Würde man die offene Seite des U-Profils oder des V-Profils mit einer Decke überdecken, so wäre der Kanal ein geschlossener Kanal.

Mit einem teilweise geschlossenen Kanal ist dann ein solcher gemeint, der teilweise als geschlossener Kanal und teilweise als offener Kanal ausgestaltet ist.

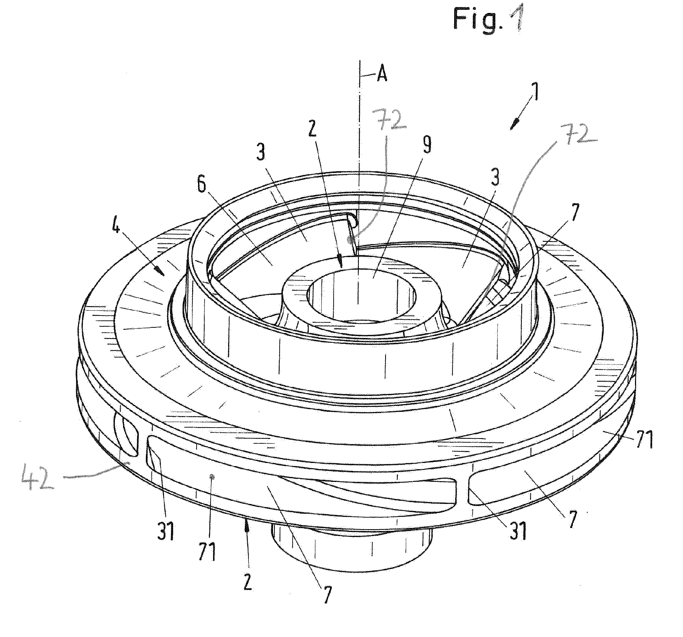

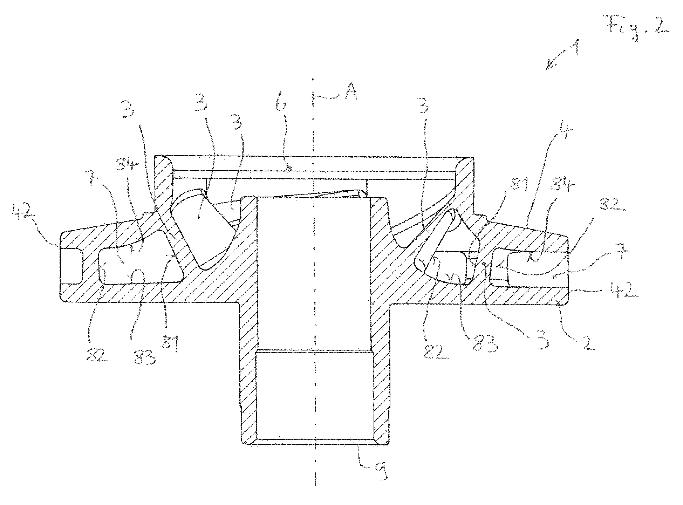

Bei der folgenden Beschreibung der Erfindung wird mit beispielhaftem Charakter auf ein für die Praxis wichtiges Beispiel Bezug genommen, bei welchem das Bauteil ein geschlossenes bzw. gedecktes Laufrad (Impeller) einer Turbomaschine, z. B. einer Pumpe ist. Zum besseren Verständnis zeigt Fig. 1 eine perspektivische Darstellung eines Ausführungsbeispiels eines erfindungsgemässen Bauteils, das ein geschlossenen Laufrads ist, und das gesamthaft mit dem Bezugszeichen 1 versehen ist. Das Laufrad 1 ist mittels eines erfindungsgemässen Verfahrens herstellbar. Fig. 2 zeigt eine Schnittdarstellung des Bauteils aus Fig. 1 in einem Schnitt in axialer Richtung.

Im Betriebszustand rotiert das Laufrad 1 um eine Drehachse, welche eine axiale Richtung A festlegt. Eine Richtung senkrecht zu dieser axialen Richtung A wird als radiale Richtung bezeichnet. Fig. 2 zeigt das Laufrad 1 in einer Schnittdarstellung entlang der axialen Richtung A.

Das Laufrad 1 umfasst in an sich bekannter Weise eine Nabenscheibe 2, mit welcher das Laufrad 1 üblicherweise auf einer nicht dargestellten Achse oder Welle montiert oder befestigt wird, ferner mehrere Schaufeln 3, die auf der Nabenscheibe 2 angeordnet sind, sowie eine Deckscheibe 4, welche die Schaufeln 3 auf ihrer der Nabenscheibe 2 abgewandten Seite bzw. Kante zumindest teilweise überdeckt. Dabei erstreckt sich die Deckscheibe 4 bezüglich der axialen Richtung A darstellungsgemäss (Fig. 1, Fig. 2) höher als die Nabenscheibe 2. Dadurch ist darstellungsgemäss oberhalb der Schaufeln 3 ein Innenraum 6 ausgebildet, der bezüglich der radialen Richtung von der Deckscheibe 4 begrenzt wird. Dieser Innenraum 6 stellt im Betriebszustand den Einlass dar, durch welchen ein Fluid das Laufrad 1 anströmt. Zwischen zwei benachbarten Schaufeln 3 existiert jeweils ein innerer Kanal 7, der als zumindest teilweise geschlossener Kanal 7 und hier als geschlossener Kanal 7 ausgestaltet ist.

Jeder Kanal 7 erstreckt sich von einem ersten Ende 72 in einem Zentrum des Laufrads 1, das durch den Innenraum 6 gebildet wird, bis an ein jeweiliges zweites Ende 71 in einer Begrenzungsfläche 42 des Laufrads 1. Die Begrenzungsfläche 42 stellt die radial äussere Oberfläche des Laufrads 1 dar, welche sich parallel zur axialen Richtung A erstreckt, also die Oberfläche, welche das Laufrad 1 in radialer Richtung begrenzt. Die Begrenzungsfläche 42 umfasst die radial äusseren Oberflächen der Deckscheibe 4 und der Nabenscheibe 2 sowie die radial äusseren Abschlusskanten der Schaufeln 3, die als Austrittskanten 31 bezeichnet werden.

Somit sind benachbarte Kanäle 7 jeweils durch eine Trennwand 3 getrennt, wobei jede Trennwand 3 jeweils eine Schaufel 3 des Laufrads 1 bildet.

Je nach Ausgestaltung des Laufrads 1 ist es natürlich auch möglich, dass die Abschlusskanten der Schaufeln 3 bezüglich der radialen Richtung zurück versetzt sind, also nicht in der Begrenzungsfläche 42 liegen. Die Deckscheibe 4 und/oder die Nabenscheibe 2 ragen dann bezüglich der radialen Richtung über die Schaufeln 3 bzw. über die Abschlusskanten der Schaufeln 3 hinaus. Eine solche Ausgestaltung ist insbesondere auch bei einem Laufrad einer Turbine möglich, bei dem die äusseren Abschlusskanten der Schaufeln 3 üblicherweise die Eintrittskanten darstellen.

Jeder der geschlossenen Kanäle 7 ist somit von einer Begrenzungsfläche umschlossen, die sich jeweils aus den einander zugewandten Oberflächen 81, 82 zweier benachbarter Schaufeln 3, sowie den dazwischenliegenden Oberflächensegmenten der einander zugewandten Oberflächen der Nabenscheibe 2 und der Deckscheibe 4 zusammensetzt, welche Oberflächensegmente den Boden 83 und die Decke 84 des jeweiligen Kanals 7 bilden. Die Schaufeln 3 bilden also jeweils eine Trennwand zwischen zwei benachbarten inneren Kanälen 7. Das zweite Ende 71 jedes Kanals 7 umfasst die Einmündung, mit welcher der jeweilige Kanal 7 in die Begrenzungsfläche 42 einmündet. In Umfangsrichtung benachbarte zweite Enden 71 sind jeweils durch eine Austrittskante 31 voneinander getrennt.

Das Laufrad 1 weist zudem eine durchgängige zentrale axiale Öffnung 9 auf, welche zur Aufnahme einer Welle oder einer Achse dient, auf welcher das Laufrad 1 montiert werden kann.

Im Folgenden wird nun eine Ausführungsform des erfindungsgemässen Verfahrens näher erläutert. Zunächst wird die gewünschte geometrische Endform des Bauteils 1, hier des Laufrads 1, festgelegt. Dann wird das Laufrad 1 mittels aufbauender Fertigung im Wesentlichen in die geometrische Endform gebracht, die für das hier beschriebene Ausführungsbeispiel z. B. in Fig. 1 gezeigt ist. Wie dies an sich bekannt ist, kann die geometrische Endform des Laufrads in Form von Daten, z. B. dreidimensionalen Geometriedaten, oder Datenmodellen in einem Computer gespeichert werden, welche dann für die Ansteuerung der Vorrichtungen für die aufbauende Fertigung verwendet werden.

Die aufbauende Fertigung ist im Unterschied zur subtraktiven Fertigung ein Verfahren, bei welchem kein Material abgetragen wird. Die aufbauende Fertigung umfasst insbesondere die Verfahren der additiven oder generative Fertigung" welche üblicherweise einen oder mehrere sukzessive durchgeführte additive Bearbeitungsschritt(e) umfasst. Mit einem additiven oder generativen Bearbeitungsschritt bzw. mit einer additiven oder generativen Fertigung ist dabei eine Fertigung gemeint, bei welcher zum Aufbau des Bauteils 1 Material aufgebracht oder aufgetragen wird.

Im Rahmen dieser Anmeldung ist der Begriff der "aufbauenden Fertigung" so zu verstehen, dass er ausser den Verfahren der additiven bzw. generativen Ferigung auch solche Verfahren umfasst, bei welchen das Bauteil aus mehreren vorgeferigten Komponenten aufgebaut wird, also beispielsweise durch das Zusammenfügen solcher vorgefertigten Komponenten.

Üblicherweise werden bei einer additiven Fertigung aus einem formlosen Material, beispielsweise Flüssigkeiten oder Pulver, oder aus einem formneutralen Material, beispielsweise band- oder drahtförmigem Material, mittels chemischer und/oder physikalischer Prozesse die gewünschten Strukturen generiert bzw. aufgebaut. An sich bekannte generative oder additive Fertigungsmethoden für metallische Werkstoffe, die sich auch für das erfindungsgemässe Verfahren eignen, sind beispielsweise Auftragschweissverfahren, speziell Inert-Gas-Verfahren wie Wolfram-Inert-Gas-Schweissen (WIG) oder Laserauftragschweissen, oder Plasmaverfahren oder selektives Laserschmelzen (SLM Selective Laser Melting) oder selektives Lasersintern (SLS), um nur einige wichtige Beispiele zu nennen.

Als Material für den Aufbau des Laufrads 1 wird üblicherweise ein metallischer Werkstoff, z. B. ein Metall oder eine Legierung verwendet.

In einer bevorzugten Ausführungsform erfolgt die aubauende Fertigung mit einem lasergestütztem Verfahren.

Beispielsweise wird das Laufrad 1 mittels selektivem Laserschmelzens generiert. Bei diesem an sich bekannten Verfahren wird das zu verarbeitende Material in Pulverform in einer dünnen Schicht vorgehalten bzw. auf das bereits teilweise aufgebaute Werkstück aufgebracht. Das pulverförmige Material wird mittels Laserstrahlung lokal vollständig aufgeschmolzen und bildet nach seiner Erstarrung eine feste Materialschicht. Anschliessend wird das Werkstück um den Betrag einer Schichtdicke abgesenkt, und es wird erneut Material in Pulverform aufgetragen, das dann wieder mittels Laserstrahlung lokal aufgeschmolzen wird. Dieser Zyklus wird solange wiederholt, bis das Bauteil 1 fertiggestellt ist.

In einer anderen Ausführungsform wird in der aufbauenden Fertigung das Bauteil 1, hier das Laufrad 1, mittels Laserauftragschweissens generiert. Das Verfahren des Laserauftragsschweissens mit seinen verschiedenen Varianten ist dem Fachman hinlänglich bekannt und bedarf deshalb hier keiner Erläuterung.

Ein weiteres ebenfalls bevorzugtes lasergetütztes Verfahren ist das bereits erwähnte selektive Lasersintern (SLS), bei welchem ein üblicherweise pulverförmiges Material durch Einwirkung eines Laserstrahls selektiv gesintert wird.

Die aufbauende Fertigung erfolgt dabei vorzugsweise jeweils schichtweise und insbesondere unter Ausnutzung der rotationssymmetrischen Ausgestaltung des Bauteils 1.

Eine andere ebenfalls bevorzugte Ausführungsform ist es, bei der aufbauenden Fertigung das Bauteil 1 komponentenweise aufzubauen, d. h. die einzelnen Komponenten des Bauteils 1 wie z.B. die Trennwände 3 oder die Überdeckungen der Kanäle 7 werden in dem Sinne sukzessive aufgebaut, dass zunächst eine Komponente, z. B. die Trennwände 3, komplett bis zu ihrem Endzustand aufgebaut wird, und anschliessend die nächste Komponente vollständig aufgebaut wird. Dieser Vorgang wird solange wiederholt, bis das Bauteil 1 fertiggestellt ist.

Ferner ist es möglich, dass die einzelnen Komponenten des Bauteils 1 nicht komplett aufgebaut werden, sondern immer nur teilweise, das heisst, man baut zunächst einen Teil der Trennwände 3 auf, dann einen Teil der Überdeckungen der Kanäle 7, dann wieder einen Teil der Trennwände 3 usw.

Das Laufrad 1 wird also mittels der aufbauenden Fertigung im Wesentlichen in die gewünschte geometrische Endform gebracht. Mit "im Wesentlichen" ist dabei gemeint, dass die wesentliche geometrische Formgebung des Bauteils 1 nach der aufbauenden Fertigung bereits abgeschlossen ist, und nur noch eine Nachbearbeitung und/oder eine Endbearbeitung des Bauteils erfolgt. Bei dieser Endbearbeitung werden typischerweise Oberflächen geglättet oder unerwünschte Oberflächenstrukturen entfernt. Auch ist mit dem Begriff "im Wesentlichen" gemeint, dass bei der aufbauenden Fertigung optional ein Bearbeitungsaufmass vorgesehen werden kann, welches dann in der Nachbearbeitung oder in der Endbearbeitung entfernt wird.

Falls die aufbauende Ferigung mehrere additive Bearbeitungsschritte umfasst, also die aufbauende Fertigung beispielsweise schichtweise erfolgt, ist es bevorzugt, wenn zwischen den sukzessive durchgeführten additiven Bearbeitungsschritten keine subtraktiven, also materialabtragenden Bearbeitungsschritte, durchgeführt werden. Das heisst, der generative Aufbau des Bauteils 1 erfolgt vorzugsweise durchgängig, ohne dass er durch dazwischenliegende subtraktive Bearbeitungsschritte unterbrochen wird. Dies ist insbesondere im Hinblick auf eine möglichst rasche und kosteneffiziente Herstellung des Bauteils 1 vorteilhaft.

Es versteht sich, dass nach der aufbauenden Fertigung, mit welcher die wesentliche Formgebung des Bauteils 1 bereits abgeschlossen ist, natürlich noch Nachbearbeitungen durchgeführt werden können, wie beispielsweise Polieren, Schleifen oder ähnliches.

Die Nachbearbeitung wird üblicherweise mittels mindestens einer subtraktiven Fertigung durchgeführt, die in einem oder mehreren subtraktiven Bearbeitungsschritt(en) durchgeführt wird.

Mit einem subtraktiven Bearbeitungsschritt bzw. mit einer subtraktiven Fertigung ist dabei gemeint, dass in einem solchen Bearbeitungsschritt Material von dem Werkstück - hier dem Bauteil 1 - abgetragen bzw. entfernt wird. Die subtraktive Fertigung kann beispielsweise eine zerspanenden Fertigung sein, bei welcher zur Erzielung einer gewünschten geometrischen Form oder Oberflächenbeschaffenheit überschüssiges Material in Form von Spänen von dem Bauteil abgetrennt wird. Zerspanende Fertigungen sind beispielsweise Fräsen, Drehen, Bohren, Hobeln, Feilen, Schleifen, Hohnen oder Läppen, um nur einige Beispiele zu erwähnen.

Andere an sich bekannte Verfahren der subtraktiven Fertigung, bei denen Material abgetragen bzw. entfernt wird, sind beispielsweise Verfahren, bei denen eine elektrische Bearbeitung erfolgt. Solche Verfahren umfassen insbesondere das Funkenerodieren (EDM: Electrical Discharge Machining), das auf elektrischen Entladevorgängen (Funken) zwischen einer als Werkzeug dienenden Elektrode und einem leitenden Bauteil, hier beispielsweise den Oberflächen 81, 82, 83, 84 des inneren Kanals 7, basiert, sowie das Elektrochemische Abtragen (ECM: Electro Chemical Machining), das auch als Elysieren bezeichnet wird. Beim ECM wird das zu bearbeitende Bauteil 1 bzw. die zu bearbeitende Oberfläche als Anode geschaltet und das Werkzeug als Kathode. Zwischen dem Werkzeug und der Anode befindet sich eine Elektrolytlösung für den Ladungstransport. Der Elektronenstrom von dem Werkzeug (Kathode) zur Anode löst dann Metallionen vom Bauteil 1, welche an der Anode Reaktionen mit Teilen des dissoziierten Elektrolyten eingehen, wodurch ein Schlamm entsteht - meistens ein Metallhydroxid -, der mittels des Elektrolyten ausgespült wird.

Weiterhin sind auch Verfahren der elektrischen subtraktiven Bearbeitung bekannt, bei welchen ECM und EDM kombiniert werden, und die üblicherweise als Electro Chemical Discharge Machining (ECDM) bezeichnet werden.

Erfindungsgemäss erfolgt nach der aufbauenden Fertigung des Bauteils eine Endbearbeitung, in welcher zumindest der innere Kanal 7 oder jeder innere Kanal 7 mittels einer subtraktiven Fertigung nachbearbeitet wird, wobei die subtraktive Fertigung eine elektrische Bearbeitung ist. Dabei ist die elektrische Bearbeitung vorzugsweise ein ECM Verfahren oder ein EDM Verfahren.

Die elektrische Endbearbeitung dient dazu, die Oberflächen 81, 82, 83, 84, welche den jeweiligen inneren Kanal 7 begrenzen, zu glätten, also ihre Rauigkeit zu reduzieren, oder unerwünschte Oberflächenstrukturen, beispielsweise lamellenartige oder wellenförmige Strukturen zu entfernen bzw. zu egalisieren. Solche Oberflächenstrukturen können prozessbedingt bei der aufbauenden Fertigung des Bauteils 1 entstehen.

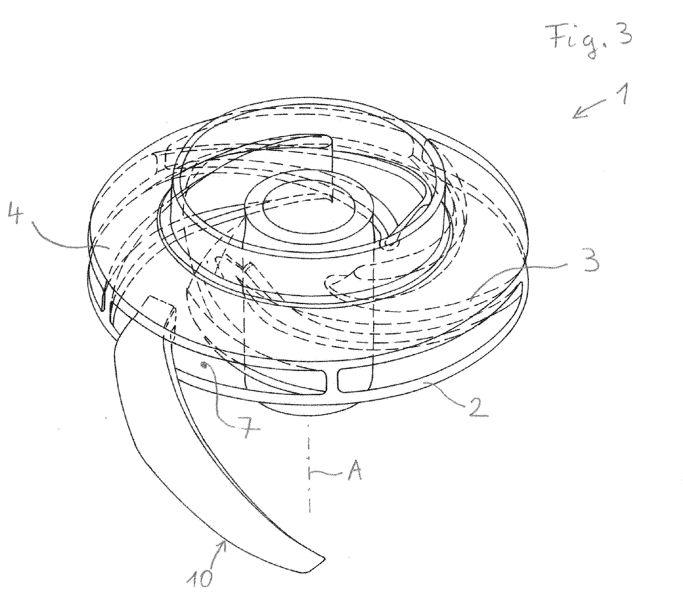

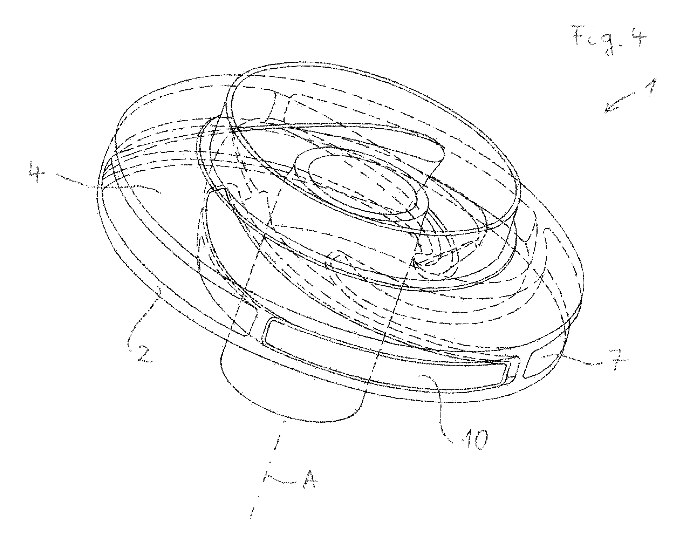

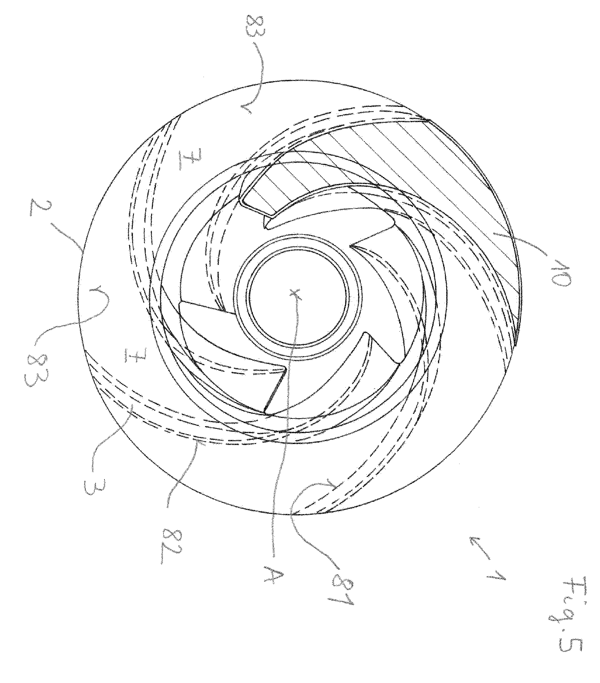

Für die elektrische Endbearbeitung wird mindestens eine Elektrode 10 verwendet, deren geometrische Form an die geometrische Form zumindest eines Teilabschnitts des jeweiligen Kanals 7 angepasst ist. Dies wird im Folgenden anhand der Fig. 3-5 erläutert. Fig. 3 zeigt eine perspektivische Darstellung des Laufrads 1 aus Fig. 1 mit einer solchen Elektrode 10 für die Endbearbeitung. Fig. 4 zeigt in einer zu Fig. 3 analogen Darstellung wie die Elektrode 10 vollständig in einen der inneren Kanäle 7 eingeführt ist, und Fig. 5 eine Schnittdarstellung des Laufrades 1 in einem Schnitt senkrecht zur axialen Richtung A mit der vollständig eingeführten Elektrode 10 für die Endbearbeitung. Zur besseren Übersicht sind in Fig. 5 die Schnittflächen des Laufrads 1 nicht schraffiert, lediglich die in den Kanal 7 eingeführte Elektrode 10 ist schraffiert dargestellt.

Bei dem hier beschriebenen Ausführungsbeispiel ist die Elektrode 10 bezüglich ihrer geometrischen Ausgestaltung an die geometrische Form des gesamten geschlossenen Bereichs des zu bearbeitenden Kanals 7 angepasst, sodass die Elektrode 10 nach ihrem vollständigen Einführen in den Kanal 7 den geschlossenen Bereich dieses Kanals 7 im Wesentlichen ausfüllt (siehe Fig. 4 und Fig. 5).

Dass die geometrischen Ausgestaltung der Elektrode 10 an die geometrische Form des zu bearbeitenden Kanals 7 angepasst ist, bedeutet, dass die Form der Elektrode 10 der Geometrie des Kanals 7 folgt, dass die Elektrode 10 also insbesondere die gleiche Krümmung aufweist wie der zu bearbeitende Kanal 7. Dabei ist es natürlich keinesfalls notwendig, dass die Elektrode den Kanal 7 im Wesentlichen vollständig ausfüllt, so wie es in Fig. 4 und Fig. 5 dargestellt ist. Vielmehr sind auch Ausgestaltungen möglich, bei denen die Elektrode 10 als ein Blech ausgestaltet ist, welches die gleiche Krümmung aufweist wie der Kanal 7, aber bezüglich der radialen Richtung deutlich dünner ist als die Erstreckung des Kanals 7 in radialer Richtung.

Es versteht sich natürlich, dass die Elektrode 10 - so wie sie in den Fig. 4 und 5 dargestellt ist - den Kanal 7 nur im Wesentlichen ausfüllt, denn für die elektrische Endbearbeitung mittels ECM oder EDM darf die als Kathode dienende Elektrode die zu bearbeitende Oberfläche 81, 82, 83 oder 84, welche die Anode bildet, nicht körperlich kontaktieren, weil es sonst zu einem elektrischen Kurzschluss zwischen Kathode und Anode käme. Dies ist auch in der Darstellung der Fig. 4 und der Fig. 5 erkennbar, wo zwischen der Elektrode 10 und den zu bearbeitenden Oberfläche 81, 82, 83, bzw. 84 jeweils ein Spalt vorgesehen ist, welcher den direkten körperlichen Kontakt zwischen der Anode und der Kathode verhindert. Dies ist dem Fachmann für elektrische Bearbeitungsverfahren wie EDM und ECM hinlänglich bekannt und braucht daher nicht näher erläutert zu werden. Je nach Ausgestaltung des Bauteils sind typische Breiten dieses Spalts beispielsweise im Bereich von 0.05 mm bis 1 mm.

Für die Endbearbeitung des Kanals 7 bzw. der Oberflächen 81, 82, 83 bzw. 84 mittels ECM oder EDM wird die als Kathode geschaltete Elektrode zunächst vollständig in den Kanal 7 eingeführt bzw. in dem Kanal 7 platziert, bevor die Strombeaufschlagung erfolgt. Bei der in den Fig. 3-5 dargestellten Variante ist die Elektrode 10 statisch, d.h. sie wird einmal in den Kanal 7 eingeführt und platziert, wonach die Strombeaufschlagung erfolgt und die vier zu bearbeitenden Oberflächen 81, 82, 83, 84 gleichzeitig behandelt werden, ohne dass dabei eine weitere Bewegung der Elektrode 10 erfolgt.

Die zu behandelnden Oberflächen 81, 82, 83 bzw. 84 werden dann mittels ECM oder mittels EDM so lange bearbeitet, bis die gewünschte Oberflächenrauigkeit erreicht ist bzw. bis die unerwünschten Oberflächenstrukturen entfernt sind.

Sowohl für EDM als auch für ECM sind dem Fachmann heute viele automatisierbare Prozesse und Vorrichtungen für deren Durchführung bekannt, sodass es diesbezüglich keiner näheren Erläuterung bedarf.

Bei der in den Fig. 3-5 dargestellten Variante wird die Elektrode 10 für die elektrische Bearbeitung von dem zweiten Ende 71 des Kanals 7, also von der Begrenzungsfläche 42 aus in den Kanal 7 eingeführt, bis sie den geschlossenen Bereich des Kanals 7 im Wesentlichen vollständig ausfüllt. Es sind natürlich auch andere Varianten möglich. Beispielsweise können für die Bearbeitung des Kanals 7 auch zwei Elektroden 10 verwendet werden, von denen sich jede nur über einen Teilabschnitt des Kanals 10 erstreckt. Dann kann die entsprechend geformte erste Elektrode 10 zunächst von dem ersten Ende 72 (oder alternativ von dem zweiten Ende 71) in den Kanal 7 eingeführt werden, um den Teilbereich des Kanals 7 zu bearbeiten, an dessen geometrische Form sie angepasst ist. Anschliessend wird diese erste Elektrode entfernt und die zweite Elektrode, deren Geometrie an den noch nicht bearbeiteten Teilbereich des Kanals 7 angepasst ist, wird von dem zweiten Ende 71 (bzw. alternativ von dem ersten Ende 72) in den noch nicht bearbeiteten Teilbereich des Kanals 7 eingeführt, um diesen zu bearbeiten und somit die Endbearbeitung abzuschliesen.

Eine weitere Variante besteht darin, zwei Elektroden 10 vorzusehen, die bezüglich der axialen Richtung A übereinander angeordnet sind, sodass mit einer Elektrode zumindest die Decke 84 des jeweiligen Kanals 7 bearbeitet wird, während mit der anderen Elektrode zumindest der Boden 83 des Kanals bearbeitet wird.

Ferner ist auch eine Variante möglich, bei welcher nur eine Elektrode 10 verwendet wird, wobei diese Elektrode von dem ersten Ende 72 in den jeweiligen Kanal 7 eingeführt wird.

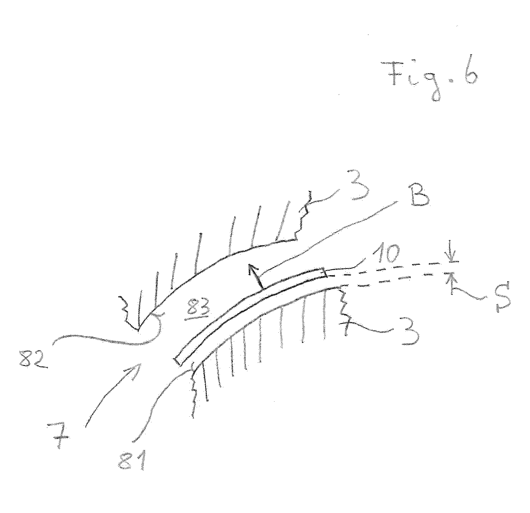

Auch ist es möglich - wie bereits erwähnt - eine blechförmige Elektrode 10 zu verwenden, deren Erstreckung in radialer Richtung deutlich kleiner ist als die erstreckung des Kanals 7 in radialer Richtung, wobei die blechförmige Elektrode 10 derart gekrümmt ist, dass sie der Krümmung des Kanals 7 folgt. Eine solche Variante ist in Fig. 6 schematisch veranschaulicht. Die Elektrode wird in den zu bearbeitenden Kanal 7 eingeführt und wird dann in radialer Richtung auf die zu bearbeitende Oberfläche - hier die Oberfläche 81, welche eine Seitenwand des Kanals 7 bildet, also die Schaufel 3 begrenzt - hin bewegt, und vor dieser platziert, sodass der für die Bearbeitung geeignete Spalt S zwischen der Elektrode 10 und der Oberfläche 81 realisiert wird. Dann erfolgt die Endbearbeitung der Oberfläche 81 mittels ECM oder mittels EDM. Wenn die Bearbeitung der Oberfläche 81 abgeschlossen ist, wird die Elektrode 10 in radialer Richtung auf die andere Oberfläche 82 zu bewegt, wie dies der Pfeil B in Fig. 6 andeutet, und so vor der Oberfläche 82 platziert, dass der für die Bearbeitung geeignete Spalt zwischen der Elektrode 10 und der Oberfläche 82 realisiert wird. Anschliessend wird durch Strombeaufschlagung die Oberfläche 82 endbearbeitet.

Bei dieser Variante kann für die Endbearbeitung der Decke 84 bzw. des Bodens 83 eine andere Elektrode verwendet werden, die zunächst oberhalb des Bodens 83 platziert wird und nach dessen Bearbeitung durch Verschieben in der axialen Richtung A unterhalb der Decke 84 platziert wird, um diese endzubearbeiten.

Es ist natürlich auch möglich, die Elektrode 10, mit welcher die die Seitenwände bildenden Oberflächen 81 und 82 bearbeitet werden, durch eine entsprechende geometrische Ausgestaltung in radialer Richtung so zu formen, dass bei der Bearbeitung einer der Oberflächen 81 und 82 jeweils auch ein Teilbereich des Bodens 83 und der Decke 84 erfolgt.

Die vorangehende beschriebenen Varianten können natürlich auch miteinander kombiniert werden.

Es versteht sich natürlich, dass ausser der erfindungsgemässen Endbearbeitung mittels einer subtraktiven elektrischen Bearbeitung zusätzlich weitere insbesondere andere Nachbearbeitungen an dem Bauteil 1 erfolgen können. So können beispielsweise die ausreichend zugänglichen Bereiche des Bauteils 1, wie beispielsweise die Deckscheibe 4 oder die Nabenscheibe 2 oder die Begrenzungsfläche 42, mittels eines anderen subtraktiven Bearbeitungsverfahrens, insbesondere mittels einer zerspanenden oder spanabhebenden Bearbeitungsmethode nachbearbeitet werden.

Gemäss einer anderen Ausführungsform des erfindungsgemässen Verfahren erfolgt die aufbauende Fertigung mittels Zusammenfügen von vorgefertigten Komponenten, um so das Bauteil im Wesentlichen in die geometrische Endform zu bringen. Dabei können beispielsweise die einzelnen vorgefertigten Komponenten durch Schweissen oder ein anderes an sich bekanntes Fügeverfahren miteinander verbunden werden. So ist es z. B. möglich, das Laufrad 1 aus zwei vorgefertigten Komponenten zusammenzusetzen, beispielsweise aus einer ersten Komponente, welche die Nabenscheibe 2, und die Schaufeln 3 mit den dazwischenliegenden Kanälen 7 umfasst, und aus einer zweiten Komponente, welche die Deckscheibe 4 umfasst. Diese beiden Komponenten werden dann in aufbauender Fertigung zusammengesetzt bzw. gefügt, beispielsweise miteinander verschweisst, um so das Laufrad 1 im Wesentlichen in seine geometrische Endform zu bringen. Nach dieser aufbauenden Fertigung erfolgt erfindungsgemäss die mittels subtraktiver Fertigung durchgeführte Endbearbeitung, bei welcher die inneren Kanäle 7 mittels einer elektrischen Bearbeitung, also insbesondere mittels ECM oder EDM endbehandelt werden. Durch diese elektrische Endbearbeitung lässen sich insbesondere auch in den Oberflächen der Kanäle 7 liegende Schweissnähte bearbeiten, sodass auch diese die gewünschte Oberflächenbeschaffenheit und Oberflächenqualität aufweisen.

Die einzelnen vorgefertigten Komponenten, aus denen das Bauteil 1 bei dieser Ausführungsform aufgebaut wird, können natürlich auch mit Hilfe zerspanender oder spanabhebender Fertigungsverfahren, z. B. Fräsen, produziert werden.

Auch wenn die Erfindung anhand der Fertigung eines Laufrads 1 erläutert wurde, so ist die Erfindung natürlich nicht auf solche Bauteile 1 bzw. ihre Herstellung beschränkt, sondern eignet sich für eine Vielzahl anderer Bauteile 1, insbesondere für solche Bauteile 1, bei denen mindestens ein innerer Kanal 7 vorgesehen ist, dessen Geometrie es nicht zulässt, ihn mit vernünftigem Aufwand zerspanend oder subtraktiv aus einem Rohling herauszuarbeiten.

Insbesondere kann das Bauteil 1 auch als Leitrad oder als Diffusor einer Rotationsmaschine ausgestaltet sein, wobei die Rotationsmaschine insbesondere eine Pumpe oder eine Turbine oder ein Kompressor oder ein Verdichter oder ein Expander sein kann.

Der innere Kanal kann beispielsweise auch ein Kühlkanal z.B. in einer Turbinenschaufel sein, beispielsweise ein Kühlluftkanal.

## Patentansprüche

1. Verfahren zur Herstellung eines Bauteils einer Rotationsmaschine, welches mindestens einen inneren Kanal (7) aufweist, der sich von einem ersten Ende (72) bis an ein zweites Ende (71) in einer Begrenzungsfläche (42) des Bauteils erstreckt, und zumindest teilweise geschlossen ist, bei welchem Verfahren eine geometrische Endform des Bauteils festgelegt wird, das Bauteil mittels aufbauender Fertigung im Wesentlichen in die geometrische Endform gebracht wird, und anschliessend eine Endbearbeitung durchgeführt wird, in welcher der innere Kanal (7) mittels einer subtraktiven Fertigung nachbearbeitet wird, wobei die subtraktive Fertigung eine elektrische Bearbeitung ist.

2. Verfahren nach Anspruch 1, bei welchem die aufbauende Fertigung mit Hilfe eines Lasers durchgeführt wird.

3. Verfahren nach einem der vorangehenden Ansprüche, bei welchem die elektrische Bearbeitung mit elektrochemischem Abtragen erfolgt.

4. Verfahren nach einem der vorangehenden Ansprüche, bei welchem die elektrische Bearbeitung mitFunkenerosion durchgeführt wird.

5. Verfahren nach einem der vorangehenden Ansprüche, bei welchem die aufbauende Fertigung schichtweise erfolgt.

6. Verfahren nach einem der vorangehenden Ansprüche, wobei die aufbauende Fertigung mehrere additive Bearbeitungsschritte umfasst, welche sukzessive und ohne dazwischenliegende subtraktive Bearbeitungsschritte durchgeführt werden.

7. Verfahren nach einem der vorangehenden Ansprüche, wobei das Bauteil eine Mehrzahl von inneren Kanälen (7) umfasst, von denen sich jeder von einem ersten Ende (72) in einem Zentrum (6) des Bauteils bis an ein jeweilges zweites Ende in der Begrenzungsfläche (42) des Bauteils erstreckt, wobei benachbarte Kanäle (7) jeweils durch eine Trennwand (3) getrennt sind.

8. Verfahren nach einem der vorangehenden Ansprüche, wobei das Bauteil (1) als Laufrad, als Leitrad oder als Diffusor einer Rotationsmaschine ausgestaltet ist, insbesondere einer Pumpe, einer Turbine, eines Kompressors, eines Verdichters oder eines Expanders.

9. Verfahren nach einem der vorangehenden Ansprüche, bei welchem für die elektrische Bearbeitung eine Elektrode (10) von dem ersten Ende (72) des jeweiligen Kanals (7) in den Kanal (7) eingeführt wird.

10. Verfahren nach einem der vorangehenden Ansprüche, bei welchem für die elektrische Bearbeitung eine Elektrode (10) von dem zweiten Ende (71) des jeweiligen Kanals (7) in den Kanal (7) eingeführt wird.

11. Verfahren nach einem der vorangehenden Ansprüche, bei welchem für die elektrische Bearbeitung eine Elektrode (10) verwendet wird, deren geometrische Form an die geometrische Form zumindest eines Teilabschnitts des jeweiligen Kanals (7) angepasst ist.

12. Verfahren nach einem der vorangehenden Ansprüche, bei welchem für die elektrische Bearbeitung eine Elektrode (10) verwendet wird, deren geometrische Form an die geometrische Form des geschlossenen Bereichs des jeweiligen Kanals (7) angepasst ist.

13. Bauteil einer Rotationsmaschine hergestellt nach einem Verfahren gemäss einem der vorangehenden Ansprüche.

14. Bauteil nach Anspruch 13, bei welchem jede Trennwand als Schaufel () ausgestaltet ist.

15. Bauteil nach Anspruch 13 oder 14, ausgestaltet als Laufrad, als Leitrad oder als Diffusor einer Rotationsmaschine, insbesondere einer Pumpe, einer Turbine, eines Kompressors, eines Verdichters oder eines Expanders.
